(19) Europäisches Patentamt / European Patent Office / Office européen des brevets

(11) **EP 2 220 523 B1**

(12) **FASCICULE DE BREVET EUROPEEN**

(45) Date de publication et mention de la délivrance du brevet:
**21.07.2021 Bulletin 2021/29**

(21) Numéro de dépôt: **08859989.9**

(22) Date de dépôt: **11.12.2008**

(51) Int Cl.:
*G02B 6/00* *(2006.01)*     *G02B 27/01* *(2006.01)*
*G02B 27/02* *(2006.01)*     *G02B 17/08* *(2006.01)*

(86) Numéro de dépôt international:
**PCT/EP2008/067300**

(87) Numéro de publication internationale:
**WO 2009/074638 (18.06.2009 Gazette 2009/25)**

(54) **GUIDE OPTIQUE ET SYSTEME OPTIQUE DE VISION OCULAIRE**

OPTISCHER LEITER UND OPTISCHES SYSTEM FÜR SEHKRAFT

OPTICAL GUIDE AND OCULAR VISION OPTICAL SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.12.2007 FR 0708694**
            **12.09.2008 FR 0856162**

(43) Date de publication de la demande:
**25.08.2010 Bulletin 2010/34**

(73) Titulaire: **Optinvent**
**35700 Rennes (FR)**

(72) Inventeurs:
- **BENOIT, Pascal**
**F-35700 Rennes (FR)**
- **DUBROCA, Guilhem**
**F-35700 Rennes (FR)**
- **SARAYEDDINE, Khaled**
**F-35700 Rennes (FR)**

(74) Mandataire: **Cabinet Le Guen Maillet**
**3, impasse de la Vigie**
**CS 71840**
**35418 Saint-Malo Cedex (FR)**

(56) Documents cités:
WO-A-01/95027     WO-A-2005/024969
WO-A-2006/061927     US-A1- 2002 172 031
US-A1- 2003 086 135     US-A1- 2005 069 254
US-B2- 6 825 987

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne le domaine des guides optiques et plus particulièrement des guides permettant le transport sans déformation d'une image. Ces guides peuvent notamment être utilisés pour la confection de systèmes optiques de vision oculaire plus communément appelés lunettes informatives.

Un guide optique est généralement constitué d'une section d'entrée par laquelle l'image est introduite. L'image est constituée d'un faisceau lumineux issu d'une source pouvant être une matrice de pixels LCD (*Liquid cristal display* en anglais) éclairés par une source de lumière. Il peut également s'agir d'une matrice de pixels OLED (*Organic light-emitting diode* en anglais ou diode électroluminescente organique en français). Un système optique permet de projeter cette image à l'infini. On parle de faisceaux collimatés. Ce faisceau collimaté est introduit dans la section d'injection du guide optique. Ce guide peut, par exemple, être constitué d'un matériau présentant deux faces parallèles. Le faisceau se propage à l'intérieur du guide par réflexion totale interne ou grâce à un traitement spécifique des parois. Le faisceau arrive alors à une section d'extraction permettant sa sortie du guide optique.

La section d'extraction peut être constituée d'un réflecteur terminant le guide par un plan incliné rejoignant les deux faces. Un tel guide est décrit dans le brevet américain publié sous la référence US 2003/0086135. Ce système est très limité en angle de vue.

Le brevet international publié sous la référence WO/2001/095027 par la société Lumus décrit une section d'extraction composée d'une série de semi-réflecteurs parallèles inclinés intégrés dans l'épaisseur du guide optique. Ce système permet d'élargir la zone dans laquelle l'œil peut voir l'image, zone appelée boîte à œil. Elle permet également d'obtenir des angles de vue plus grands que ceux obtenus par le système précédent. Toutefois, sa réalisation est coûteuse du fait de l'intégration des semi-réflecteurs au cœur du guide.

Le brevet US 6 825 987 B2 décrit un dispositif selon le préambule de la revendication 1. L'invention vise à résoudre les problèmes précédents par un guide optique doté d'une section d'extraction constituée de microstructures réfléchissantes en surface du guide. Ces microstructures forment des prismes ayant un angle calculé pour renvoyer le faisceau lumineux selon un angle avec la face opposée permettant sa sortie du guide. Avantageusement, la taille et la disposition de ces microstructures permettent de les rendre invisibles à l'œil tout en générant une image large et confortable. La section d'extraction selon la présente invention offre l'avantage d'être simple et peu coûteuse du fait qu'elle peut être intégrée au moule de fabrication du guide optique. Un simple revêtement réfléchissant est déposé sur la surface inclinée des prismes.

L'invention est exposée dans le jeu de revendications joint.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 illustre le schéma général de l'exemple de réalisation de l'invention.
La Fig. 2 illustre la section d'entrée de l'exemple de réalisation de l'invention.
La Fig. 3 illustre le fonctionnement d'un élément de la section d'extraction.
La Fig. 4 illustre une répartition possible des éléments de la section d'extraction.
La Fig. 5 illustre la définition des angles limites de l'image de sortie.
La Fig. 6 illustre un mode particulier de réalisation de la section d'extraction.
La Fig. 7 illustre un mode particulier de réalisation de deux zones de la section d'extraction.
Les Fig. 8 et 9 illustrent le dimensionnement de la zone d'extraction dans deux modes de réalisation de la section d'extraction.

La présente invention consiste en un guide optique permettant le transport sans déformation d'une image. L'invention va être décrite en référence à un mode particulier de réalisation destiné à être utilisé dans un système optique de vision oculaire. L'invention peut toutefois être utilisée dans tout autre domaine utilisant des guides optiques tels que des écrans intégrés dans des pare-brises automobile ou encore dans le cockpit d'un avion.

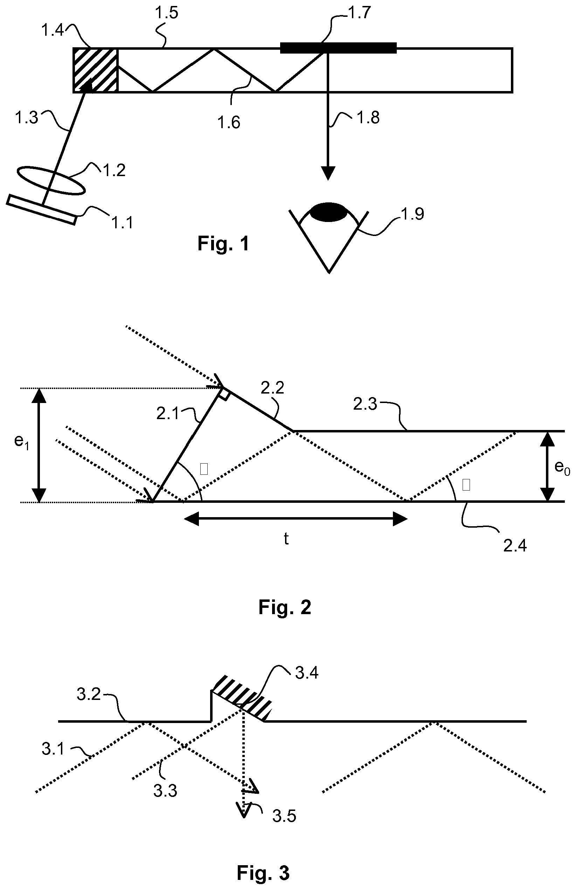

Le schéma général de l'exemple de réalisation est illustré Fig. 1. Une source de lumière 1.1 génère une image lumineuse destinée à transiter par le guide optique. Cette source peut consister en une matrice de pixels LCD disposant d'un éclairage arrière ou encore d'une matrice de pixels OLED. Toute source d'image lumineuse peut être utilisée ici. Cette image est projetée à l'infini, on dira collimatée, par un système optique 1.2. Les différents pixels de l'image sont donc projetés par un faisceau de rayons lumineux parallèles 1.3 en sortie du système optique 1.2. Le champ de vision est défini par la focale de l'objectif et par la demi-diagonale de l'image à projeter. Le faisceau collimaté 1.3 entre dans le guide optique 1.5 par une section d'injection 1.4. Cette section d'injection est détaillée Fig. 2. Le faisceau est alors transporté dans le guide optique 1.5 sur une longueur arbitraire. Le guide optique 1.5 est constitué d'un matériel transparent à la lumière et présentant deux faces parallèles. Le faisceau lumineux 1.6 est guidé par ces deux faces et se propage par réflexion totale dans le guide. Si l'indice du matériau transparent composant le guide est supérieur à ceux des milieux qui l'entourent, des réflexions internes totales se produisent naturellement dès lors que l'angle d'incidence des rayons du faisceau est suffisamment faible par rapport à la face du guide. Alternativement si les indices extérieurs sont supérieurs ou égaux, il est possible de disposer d'un dépôt de couches minces de matériau diélectrique pour suppléer dans certaines limites la condition de réflexion totale interne. Le faisceau arrive alors dans une zone appelée section d'extraction 1.7. Cette zone permet au faisceau de ressortir du guide. Cette zone d'extraction 1.7 est située sur l'une des faces du guide. Elle va permettre de renvoyer les rayons lumineux constituant le faisceau vers l'autre face selon un angle sensiblement perpendiculaire qui va permettre leur sortie du guide. Le faisceau 1.8 sorti du guide peut alors être projeté vers un capteur 1.9 qui peut être l'œil de l'utilisateur dans le cas d'un système optique de vision oculaire.

La Fig. 2 illustre la section d'injection 1.4 telle que réalisée dans l'exemple de réalisation de l'invention. D'autres réalisations de la section d'injection sont possibles sans sortir du cadre de l'invention dans la mesure où le faisceau lumineux entre dans le guide sans subir de dégradation susceptible de dégrader l'image. La section d'injection est composée d'une face plane d'entrée 2.1 faisant un angle $\beta$, différent de 90°, avec le plan des surfaces parallèles du guide. Le faisceau collimaté entre perpendiculairement à cette face d'entrée. Une facette descendante 2.2 relie cette face d'entrée et la surface supérieure 2.3 du guide. Cette facette est perpendiculaire à la face d'entrée. Avantageusement cette facette est absorbante pour éviter les images parasites. Les rayons lumineux du faisceau traversent la face d'entrée et viennent frapper la face inférieure 2.4 du guide optique. L'angle $\beta$ est calculé de façon à ce que l'angle $\alpha$ d'incidence des rayons avec la face inférieure 2.4 du guide permette une réflexion totale du rayon. Le rayon ainsi injecté dans le guide optique se retrouve piégé et se propage le long du guide par réflexion sur les surfaces parallèles de celui-ci. Il conserve l'angle d'incidence $a$ lors de chaque rebond contre les surfaces du guide. Dans ce système il peut apparaître des trous entre chaque rebond du faisceau sur l'une des faces. Si l'on appelle $e_0$ l'épaisseur du guide, la distance s entre deux rebonds d'un rayon est :

$$s = e_0.tan(\beta).$$

Le faisceau entrant s'étale sur une distance :

$$t = 2\ e_0\ /\ sin(2\beta).$$

Pour qu'il n'y ait pas de trous, il faut que *2s < t.* Or pour $\beta > 45°$, on a *2s > t.* Pour favoriser les réflexions totales internes, il est souhaitable que cette condition $\beta > 45°$ soit vérifiée.

Pour minimiser ces trous, on peut augmenter la largeur de la face d'entrée. Si l'on appelle $e_1$ la distance entre le sommet de la face d'entrée et la face inférieure du guide, on doit avoir pour un rayon d'incidence normale à la face d'entrée et pour ne plus avoir de trous la condition suivante :

$$e_0.tan(\beta) = e_1/sin(\beta)\ ;$$

soit :

$$e_1 = 2e_0sin^2(\beta).$$

On remarque toutefois que si les rayons entrants ne sont pas normaux à la surface d'entrée, des trous peuvent encore exister. Pour équilibrer les trous, on peut décider de faire en sorte que le trou soit nul pour une incidence différente de la normale en agrandissant la face d'entrée et/ou en jouant sur l'angle que fait la facette descendante avec la face d'entrée.

La section d'extraction est une section comprenant des microstructures. Ces microstructures sont disposées en surface du guide optique sur l'une des faces de ce guide, les rayons extraits sortant par la face opposée du guide. Elles peuvent être réfractives ou réflexives. La structure peut être unidimensionnelle composée de lignes extractrices ou bidimensionnelle formée d'une mosaïque d'éléments extracteurs. Les éléments extracteurs sont, par exemple, des prismes à face plane dont l'angle actif est constant le long de la structure. La taille et la disposition de ces structures dépendent de l'application utilisant le guide. Dans le cas d'un système optique de vision oculaire, la taille des microstructures sera avantageusement petite par rapport à la taille de la pupille de l'œil, par exemple de l'ordre de quelques dizaines de $\mu$m. De cette façon, l'image ne varie pas en fonction de la position et des mouvements de l'œil. Du fait de leur taille et de leur faible distance de l'œil, ces microstructures sont également invisibles à l'œil nu. D'autre part, ces microstructures ne couvrant pas intégralement la face du guide, celui-ci reste transparent et permet une vision à travers le guide tout en visualisant l'image issue du guide. Le système permet la vue à travers (*see through* en anglais).

L'exemple de réalisation est basé sur des microstructures réfléchissantes. La structure d'une de ces microstructures est illustrée Fig. 3. La microstructure 3.4 est formée en surface de la face 3.2 du guide. Elle forme un prisme en saillie de cette surface 3.2. Un rayon incident du faisceau lumineux 3.1 qui frappe la surface du guide est totalement réfléchi pour continuer sa course au sein du guide. Au contraire, un rayon incident 3.3 qui frappe la face inclinée de la microstructure 3.4 se voit réfléchi en un rayon 3.5 vers la seconde face du guide selon un angle proche de la normale. De ce fait, le rayon réfléchi 3.5 par la microstructure 3.4 n'est pas réfléchi par la seconde surface et sort du guide. La microstructure est donc formée sur la face opposée à la face de sortie de l'image.

La microstructure peut être formée sur la face du guide optique par moulage lors de la fabrication dudit guide. Il suffit alors de déposer sur la face inclinée de la microstructure une couche réfléchissante telle que de l'aluminium ou de l'argent. La largeur de la microstructure doit être supérieure à la longueur d'onde de la lumière visible et donc au moins de 10 μm. Pour l'application envisagée de système optique de vision oculaire, sa largeur doit rester petite par rapport à l'épaisseur du guide et par rapport à la taille de la pupille de l'œil, donc pratiquement inférieure à 200 μm. Le lecteur comprend que dans des applications différentes, d'autres tailles de microstructures peuvent être envisagées sans sortir du cadre de l'invention. Alternativement, les prismes peuvent être formés non pas en saillie, mais par des creux dans la surface sans modifier le fonctionnement des microstructures. Ces microstructures peuvent prendre des formes variées dans la mesure où elles présentent une face réfléchissant les rayons incidents selon un angle proche de la normale à la face de sortie du guide optique.

Pour ce qui est de la disposition de ces microstructures sur la surface du guide, une grande liberté s'offre à la conception. Cette disposition dépend typiquement des contraintes liées à l'application visée par le guide optique. Dans l'absolu, l'existence d'une seule de ces microstructures ayant une largeur au moins égale à 10 μm permet de sortir une image du guide. Dans la pratique, pour obtenir des images de qualité offrant un large champ de vision, on disposera un ensemble de ces microstructures en surface du guide. Il peut être envisagé de couvrir complètement une zone d'extraction de telles microstructures. Toutefois, l'intégralité des rayons étant de ce fait extraite par ladite zone, la boîte d'œil offerte est limitée. Dans l'exemple de réalisation de l'invention, le guide comportant deux faces planes parallèles, tous les rayons incidents arrivent sensiblement avec la même incidence sur les microstructures. Elles seront donc dotées de surfaces planes réfléchissantes ayant toutes le même angle. Dans certains modes de réalisation, par exemple si le guide est courbe, l'angle de la surface plane des microstructures peut varier d'une microstructure à une autre. Avantageusement, les microstructures seront disposées sur la surface de façon à disposer des espaces dits interstitiels entre les microstructures. Avantageusement, ces espaces seront plans dans la continuité de la surface du guide. De cette façon, seule une partie des rayons incidents sera réfléchie par la zone d'extraction, tandis que d'autres seront réfléchis par les zones interstitielles et continueront leur chemin dans le guide. Il est donc possible de ménager plusieurs zones d'extraction permettant chacune l'extraction d'une image. Cet agencement permet d'obtenir une large boîte à œil et un large champ de vision permettant un grand confort de vision. D'autre part, les zones interstitielles, c'est-à-dire les zones non couvertes de microstructures et prenant place entre celles-ci, sont transparentes et leur existence permet d'obtenir l'effet de vision à travers qui permet de conserver la possibilité de voir les scènes au-delà du guide.

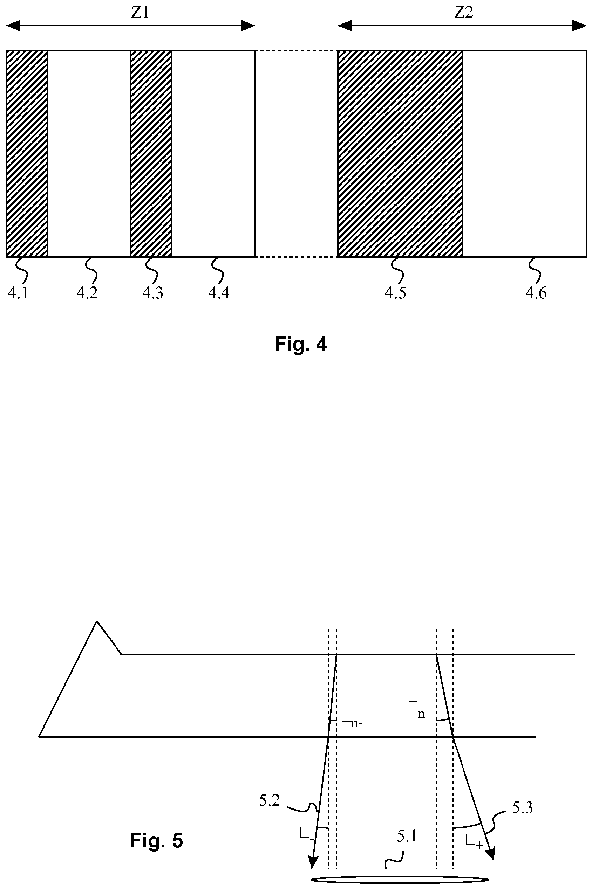

La Fig. 4 représente un exemple de disposition de ces microstructures en deux zones d'extraction. Une première zone Z1 d'extraction est composée d'une répétition d'une structure élémentaire composée d'une microstructure 4.1 formant une bande dont la longueur équivaut à la longueur de la zone d'extraction et la largeur une largeur typique comprise, par exemple entre 10 et 200 μm. Jouxtant cette microstructure, une zone interstitielle d'une largeur double 4.2 fait la même longueur. Cette structure élémentaire se répète périodiquement sur une largeur de l'ordre du centimètre. Une seconde structure est représentée par la microstructure 4.3 et la zone interstitielle 4.4. On constate donc que cette première zone extrait le tiers de l'intensité lumineuse du faisceau incident, les deux tiers se réfléchissant sur les zones interstitielles pour atteindre une zone Z2. Cette seconde zone est constituée elle aussi d'une structure répétitive composée d'une première microstructure 4.5 d'une largeur triple de la largeur de la microstructure de la première zone et d'une zone interstitielle 4.6 de la même largeur que la microstructure. Seuls les rayons non extraits par la première zone arrivent sur la seconde zone dont la moitié est alors extraite par cette zone Z2. On constate que le choix fait des tailles relatives des microstructures des deux zones a pour effet qu'un même pourcentage de la lumière émise par la source est extrait dans chaque zone. En effet, la première zone extrait un tiers des rayons incidents, tandis que la seconde zone extrait la moitié des deux tiers des rayons non extraits par la première zone. Au final, chaque zone extrait donc un tiers des rayons incidents. L'extraction est donc homogène entre les deux zones.

A chaque point sur l'objet dont on fait l'image, l'objectif d'injection fait correspondre un angle. Par conséquent le pas s entre deux rebonds change suivant le point considéré sur l'objet, et prend des valeurs dans un certain intervalle. Il se crée alors, pour une position sur la première zone, un décalage de l'impact sur la deuxième zone suivant le point de l'objet dont on fait l'image considérée. L'empreinte du motif de la première zone varie ainsi sur le motif de la deuxième zone. Cela peut entraîner l'apparition de bandes noires si les zones ne sont pas construites de sorte à prendre en compte ce décalage. La structure décrite ci-dessus prend en compte l'effet du décalage, la réflectivité est constante quel que soit celui-ci et donc pour tous les points de l'objet dont on fait l'image.

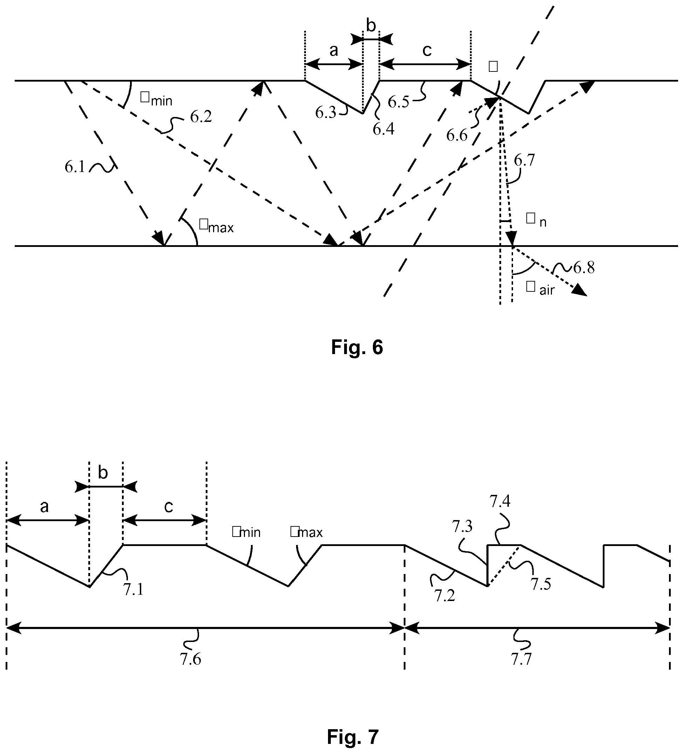

La Fig. 6 illustre un mode particulier de réalisation des microstructures. Dans ce mode de réalisation, dit en creux, les prismes sont orientés vers l'intérieur du guide et non pas vers l'extérieur comme dans le mode dit en saillie. Ils sont dits en saillie lorsque le point du prisme le plus éloigné du plan défini par la face parallèle sur laquelle ils sont construits est tel que l'épaisseur est à cet endroit supérieure à l'épaisseur du guide au niveau des sections plates séparant 2 prismes. Dans le cas où cette épaisseur est inférieure, ils sont en creux.

La section d'extraction est composée de prismes en creux formés de miroir 6.3 dont la réflexion est totale et d'une surface de raccord 6.4 qui permet de revenir au niveau de la surface 6.5 du guide. Appelons $\mu$ l'angle formé par les miroirs 6.3 d'extraction des microstructures avec les faces du guide. Ces miroirs transforment les rayons incidents 6.1, 6.2 ou 6.6, se propageant dans le guide avec un angle $\alpha$ avec les faces du guide, en rayons 6.7 faisant un angle $\omega_n$ dans le guide avec la normale aux faces. Cet angle $\omega_n$ est tel que le rayon sort alors du guide par réfraction. Après cette sortie du guide, le rayon 6.8 fait alors un angle $\omega_{air}$ avec la normale aux faces du guide.

On peut noter que la projection sur la surface du guide du miroir a une longueur *a*, la projection de la surface 6.4 une longueur *b* et la distance entre deux microstructures une longueur *c*.

La Fig. 5 illustre la sortie du guide. Pour construire un guide optique tel que celui ici décrit, on commence par déterminer ce que l'on appelle la « boîte à œil » 5.1, c'est-à-dire l'étendue de l'image extraite et sa direction. On détermine donc la sortie du guide que l'on caractérise par les deux champs ou rayons extrêmes 5.2 et 5.3 notés respectivement $\omega_-$ et $\omega_+$. Il faut noter que, l'image n'étant pas nécessairement centrée sur la normale aux faces parallèles, ces deux nombres ne sont pas nécessairement tels que l'un est l'opposé de l'autre, bien qu'en pratique cela soit souvent le cas.

L'angle $\mu$ des miroirs d'extraction étant choisi, ces angles $\omega_-$ et $\omega_+$ des rayons limites de l'image de sortie définissent les angles $\omega_{n-}$ et $\omega_{n+}$ que font les rayons correspondants dans le guide. A ces rayons dans le guide correspondent des rayons incidents avant la réflexion dans le miroir d'extraction faisant des angles limites respectifs $\alpha_{max}$ et $\alpha_{min}$ vis-à-vis des faces du guide optique.

L'angle $\mu$ peut être associé à un rayon de référence, pour lequel ce rayon est parallèle a la surface du miroir. Ce rayon n'est pas nécessairement dans l'intervalle [$\alpha_{min}$, $\alpha_{max}$] déterminé par l'image à produire. On a alors $\mu$ = a et donc la relation :

$$\alpha = \mu = \frac{\pi/2 - \omega_n}{3};$$

Dans le cas où les miroirs sont en creux dans le guide, il apparaît que, pour éviter les réflexions parasites, l'angle $\mu$ doit être inférieur à une certaine valeur : celle qui est associée à $\omega_+$ par la formule ci-dessus. Dans ce cas, on a $\mu \le \alpha_{min}$. Dès lors, les rayons se propageant dans le guide et provenant du champ $\omega_+$ ne pourront intercepter le miroir après une réflexion sur la face parallèle sur laquelle sera bâti le miroir : ces rayons seront au pire parallèles aux miroirs. Comme les autres champs sont plus inclinés par rapport aux faces parallèles, ils n'interceptent pas non plus les miroirs dans les mêmes conditions.

Le fait de prendre un angle $\mu$ plus petit que l'angle limite donné par la formule permet également de se donner des marges de fabrication. Cela correspond en effet à se donner un champ extrême plus grand qu'il ne l'est en réalité et, ainsi, les imperfections de centrage auront un effet moindre sur la qualité de l'image.

On peut aussi considérer le cas où on prend $\mu$ supérieur à la valeur associée à $\omega_-$. Dans ce cas, on a $\mu \ge \alpha_{max}$. À ce moment-là, les rayons parasites auront tous un angle par rapport aux faces parallèles plus grand que $\alpha_{max}$. En effet, si un angle de rayon $\alpha$ se réfléchit sur le miroir en provenant de la face parallèle où est bâti le miroir, il a après réflexion un angle égal à $\mu + (\mu - \alpha) \ge \alpha_{max} + (\alpha_{max} - \alpha) \ge \alpha_{max}$. Ces parasites ne brouillent alors plus l'image. L'image parasite commence au pire juste à côté du champ extrême, apparaissant comme une image vue dans un miroir de l'image voulue.

Toutefois, lorsque les différences d'angles sont faibles, le nombre de rayons interceptés est faible, tendant vers 0 lorsque l'angle $\alpha$ tend vers l'angle $\alpha_{max}$. La luminance de l'image parasite est, elle aussi, faible près de l'image principale, ce qui la rend peu gênante. Les rayons les plus inclinés étant aussi ceux à extraire en premier, le fait de créer des parasites à partir de ces rayons n'entraîne pas de pertes de lumière importante. Il faut tout de même noter que cette situation est dans l'absolu moins favorable que le cas $\mu \le \alpha_{min}$ car on crée tout de même une image parasite, même si celle-ci n'interfère pas directement avec l'image recherchée.

Dans ce cas, on constate aussi que l'angle $\alpha_{min}$ est plus petit que dans le premier cas. Ceci est un avantage, car la tache formée par le faisceau injecté pour un champ donné sur une face parallèle sera alors plus grande, ce qui permet d'élargir la zone d'extraction. Cela dit, les tolérances sur le parallélisme des faces deviennent alors plus contraignantes.

Lorsque les prismes sont en creux, il existe donc un intervalle pour la valeur de l'angle $\mu$ que forment les miroirs d'extraction avec les faces du guide qui entraîne la génération de rayons parasites pouvant gêner la perception de l'image de sortie. Avantageusement on évite donc de choisir un angle $\mu$ dans cet intervalle, entre

$$\mu_- = \frac{\pi/2 - \omega_{n+}}{3} \quad et \quad \mu_+ = \frac{\pi/2 - \omega_{n-}}{3}$$

pour ne pas créer de parasites qui influeront directement sur l'image, par une sorte de repliement de l'image sur elle-même.

Une autre caractéristique importante des prismes en creux et en saillie est l'ordre de position entre les prismes, les sections de liaisons et les sections parallèles. Pour permettre une imagerie de qualité, l'angle $\mu$ que font les miroirs avec les faces parallèles, par exemple entre le miroir 6.6 et la surface 6.5 du guide, doit être constant pour toutes les microstructures, faute de quoi l'image est brouillée.

Lorsque les prismes sont en saillie, le choix de l'angle est libre pour ce qui est des parasites. En effet, seuls les rayons à extraire peuvent être interceptés par le miroir.

Le motif périodique se compose de trois parties. La première est le miroir proprement dit. La longueur a de sa projection orthogonale sur la face parallèle est contrainte d'une part par la diffraction, qui, pour conserver une qualité d'imagerie correcte, exige une taille minimale. D'autre part, l'épaisseur du guide et le confort d'observation imposent que la longueur soit limitée.

La deuxième partie est celle du raccord qui joint le bout du miroir et la face parallèle. La longueur $b$ de sa projection sur la face parallèle est positive afin de permettre une fabrication aisée. Elle a aussi une limite supérieure $b_{max}$ : si l'angle que forme le raccord avec la face parallèle est inférieur à $\alpha_{max}$, il se produit soit du vignetage, soit des rayons parasites apparaissent. Même si ce raccord n'est pas plan, il doit respecter cette règle en restant du même côté du plan qui assure l'absence de vignetage et de rayons parasites pour se préserver de tels effets. La longueur $b_{max}$ correspond à la longueur minimale de l'ombre que fait le miroir en fonction des champs.

La troisième et dernière partie est une section plane. Elle permet à la fois de voir à travers le guide et d'assurer la propagation dans le guide des rayons dont on veut que l'extraction se produise plus loin. Sa longueur c est positive du fait de sa nature, elle est aussi déterminée par la fraction des rayons qu'on veut extraire.

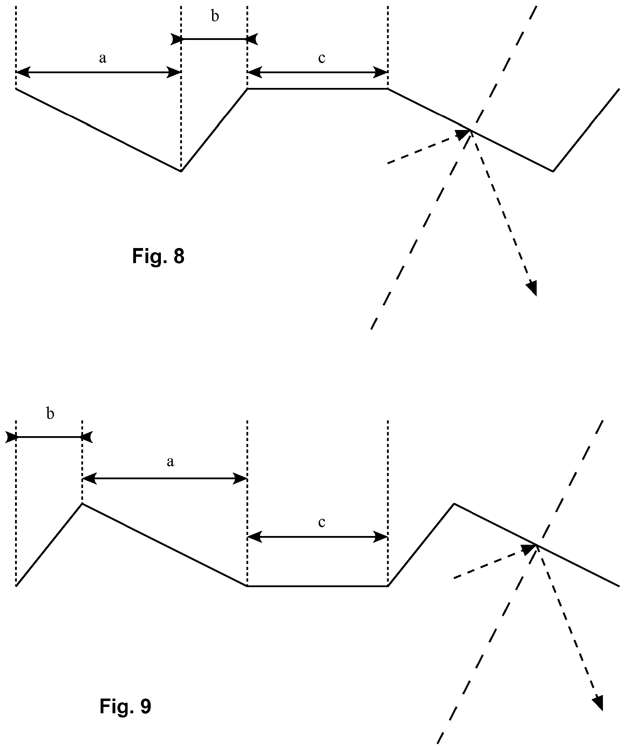

On retrouve cette disposition sur la Fig. 8. En comparaison, dans le cas de prismes en saillie Fig. 9, l'ordre des parties change. Le raccord vient d'abord, puis le miroir et enfin la section parallèle aux faces.

Avantageusement, dans le cadre d'un système où on veut à la fois voir l'image transportée par le guide et l'environnement à travers le guide (cas dit *see-through* en anglais), il s'avère nécessaire que ces parties aient d'autres caractéristiques. Si le guide est inséré dans un milieu d'indice similaire, le raccord ne dévie pas les rayons. Par contre, si le guide est plongé dans un milieu d'indice différent du sien, le raccord va dévier les rayons si $b$ est strictement positif. Il est alors avantageux que le raccord ait lui aussi un revêtement réfléchissant ou opaque de façon à éviter que la vue de l'utilisateur ne soit perturbée.

Comme la quantité relative de rayons extraite dépend de $a$, $b$ et $c$, il est possible en les faisant varier de moduler cette quantité. Il est ainsi possible de créer plusieurs zones où la quantité de rayons extraite va croissant, de façon à maintenir la quantité absolue de rayons extraite constante entre toutes les zones et d'assurer une certaine uniformité de l'image.

La taille d'une zone est liée directement à la distance parcourue par un rayon, partant d'une face parallèle et se réfléchissant sur l'autre face parallèle pour revenir sur la première face. Cette distance, égale aussi à la largeur de l'empreinte du faisceau sur les faces parallèles, dans le cas d'une bonne injection, dépend de l'angle de propagation des rayons et de l'épaisseur du guide. Aussi, les rayons les moins inclinés dans le guide ayant les empreintes les plus petites et devant également aussi se propager de préférence plus loin dans le guide avant d'être extraits, la taille des sections sera plutôt judicieusement définie en référence à l'empreinte des rayons les plus inclinés dans le guide. Suivant le taux d'extraction des zones et la répartition des motifs, on peut générer ainsi plusieurs sections (1,2,3,...) de façon à éclairer uniformément la zone ou doit se positionner l'œil et également maintenir une bonne uniformité de l'image projetée. Un nombre élevé de sections autorise une zone oculaire large et/ou une taille angulaire de l'image projetée grande.

La Fig. 7 illustre un exemple de réalisation d'une zone d'extraction en deux sections. Une première section 7.6 est réalisée avec des microstructures en creux 7.1 tel que décrit ci-dessus. Elle est caractérisée par les valeurs choisies de $a$, $b$ et $c$. Les angles faits par le miroir, d'une part, et le raccord, d'autre part, peuvent, par exemple, prendre respectivement les valeurs $\alpha_{min}$ et $\alpha_{max}$. On peut prendre par exemple pour cette première zone $c = a$ et $b = b_{max}$. Dans la seconde zone 7.7, on prend des valeurs de $b = 0$ et $c = b_{max}$, la valeur de $a$ restant inchangée. Dit autrement, on conserve la même surface de miroir 7.2. Si l'on avait conservé le raccord tel que dans la première zone représentée en pointillé 7.5, la surface plane entre les microstructures disparaissait. Au lieu de cela, on implémente une surface de raccord 7.3 verticale pour recréer un plat 7.4 qui permet la vision à travers le guide. Tous les rayons sont extraits dans la deuxième zone, alors que la moitié en sont extraits dans la première zone. On extrait donc la moitié des rayons utiles du départ dans la première zone, puis la moitié restante dans la deuxième zone.

Dans ce cas, si on prend $\alpha_{min}$ = 27.4° et $\alpha_{max}$ = 43.9°, on a $b_{max} = a * \tan(\alpha_{min}) / \tan(\alpha_{max})$ soit environ 0.54a. Si les miroirs et les raccords sont parfaitement opaques et si les sections transparentes transmettent toute la lumière incidente de l'environnement, la transmission est d'environ 39% dans la première zone et d'environ 35% dans la seconde. Cette organisation permet donc de conserver approximativement une transmission constante pour la lumière provenant de l'environnement extérieur.

Les zones dans la continuité des faces parallèles du guide avant et après la zone d'extraction peuvent être traitées de façon à devenir semi-réfléchissantes pour harmoniser la transmission de la scène extérieure entre la zone d'extraction et les autres zones, sans gêner la réflexion totale interne des rayons de l'image à projeter à l'intérieur du guide.

L'invention peut également s'appliquer à un guide optique dont les deux faces sont courbes, parallèles ou pas. Les déformations induites par cette courbure et par le non-parallélisme éventuel peuvent alors être compensées par le dispositif optique utilisé pour générer le faisceau, avant son injection dans le guide. De tels guides optiques peuvent être utilisés pour la fabrication de systèmes optiques de vision oculaire. Dans ce cas le guide optique peut constituer le verre de la lunette ou y être intégré.

Selon un mode particulier de réalisation de l'invention, les surfaces plates entre les microstructures 6.5 ne sont pas alignées les unes avec les autres. Elles restent malgré tout parallèles. On peut ainsi faire varier l'épaisseur du guide par une diminution de la distance entre ces zones et la surface d'extraction. On peut ainsi jouer sur la forme du guide optique sans nuire à ses qualités fonctionnelles.

La structure en deux zones proposée est indicative. Il est possible de concevoir des zones d'extraction possédant plus de deux zones d'extraction ou une seule. D'autre part, l'utilisation de microstructure en bande continue sur toute la longueur de la zone d'extraction peut être remplacée par tout type de disposition comme une disposition en damier par exemple.

**Revendications**

1. Dispositif de guidage optique d'un faisceau lumineux (1.3) transportant une image comportant :

   - un matériau formant un guide (1.5) doté de deux faces planes parallèles (2.3, 2.4), le faisceau lumineux transportant l'image étant alors collimaté ;
   - une section d'injection (1.4) permettant l'entrée du faisceau lumineux dans le guide (1.5), le faisceau (1.6) se propageant dans le guide par réflexions successives sur les deux faces (2.3, 2.4) du guide ;
   - une section d'extraction (1.7) permettant la sortie du faisceau ;

   où la section d'extraction comporte une pluralité de microstructures situées en surface d'une des deux faces (3.2) du guide (1.5), chaque microstructure comporte une surface plane réfléchissante (3.4) provoquant la sortie, via la face opposée du guide, des rayons lumineux (3.5) du faisceau venant frapper ladite surface plane réfléchissante (3.4), lesdites surfaces planes réfléchissantes (3.4) sont parallèles entre elles, et **caractérisé en ce que** la section d'extraction comporte au moins une zone interstitielle transparente qui est formée d'une section plane parallèle à la surface du guide et qui est disposée entre lesdites microstructures.

2. Dispositif de guidage optique selon la revendication 1, **caractérisé en ce que** chaque microstructure est composée d'un prisme formant saillie sur la face du guide (3.2).

3. Dispositif de guidage optique selon la revendication 1, **caractérisé en ce que** chaque microstructure est composée d'un prisme en creux sur la face du guide (6.3, 6.4).

4. Dispositif de guidage optique selon l'une des revendications 1 à 3, **caractérisé en ce que** ladite section d'extraction est composée de plusieurs zones, chaque zone étant **caractérisée par** une disposition particulière des microstructures et des zones interstitielles.

5. Dispositif de guidage optique selon l'une des revendications 1 à 4, **caractérisé en ce que** chaque microstructure est une bande sur toute la longueur de la section d'extraction.

6. Dispositif de guidage optique selon l'une des revendications 1 à 5, **caractérisé en ce que** la sortie du faisceau du guide optique forme une image de sortie définissant deux rayons extrêmes formant respectivement des angles $\omega_-$ et $\omega_+$ avec la normale à la surface d'extraction à l'extérieur du guide et $\omega_{n-}$ et $\omega_{n+}$ avec la normale à la surface d'extraction à l'intérieur du guide, et l'angle $\mu$ fait par ladite surface plane réfléchissante (3.4) de chaque microstructure avec la surface d'extraction a une valeur inférieur à un angle $\mu_- = \dfrac{\pi/2 - \omega_{n+}}{3}$ ou supérieure à un angle $\mu_+ = \dfrac{\pi/2 - \omega_{n-}}{3}$.

7. Procédé de fabrication d'un dispositif de guidage optique selon l'une des revendications 1 à 6, **caractérisé en ce qu'**il comporte les étapes suivantes :

   - une étape de génération par moulage de la pluralité de microstructures et de ladite au moins une zone interstitielle transparente à la surface d'une des deux faces du guide optique ;
   - une étape de dépose d'une couche mince réfléchissante sur la surface plane de chaque microstructure destinée à provoquer la sortie du guide des rayons lumineux (3.5) du faisceau venant frapper ladite surface plane (3.4).

8. Système optique de vision oculaire **caractérisé en ce qu'**il comprend un dispositif de guidage optique selon l'une des revendications 1 à 6.

**Patentansprüche**

1. Optische Leitvorrichtung eines ein Bild transportierenden Lichtbündels (1.3), die aufweist:

   - ein Material, das einen Leiter (1.5) bildet, der mit zwei parallelen ebenen Seiten (2.3, 2.4) versehen ist, wobei der das Bild transportierende Lichtbündel dann kolmatiert wird;
- einen Injektionsabschnitt (1.4), der den Eintritt des Lichtbündels in den Leiter (1.5) erlaubt, wobei das Bündel (1.6) sich durch aufeinanderfolgende Reflexionen auf den zwei Seiten (2.3, 2.4) des Leiters im Leiter ausbreitet;
- einen Entnahmeabschnitt (1.7), der den Austritt des Bündels erlaubt;

wobei der Entnahmeabschnitt eine Vielzahl von Mikrostrukturen aufweist, die sich an der Oberfläche einer der zwei Seiten (3.2) des Leiters (1.5) befinden, wobei jede Mikrostruktur eine reflektierende ebene Fläche (3.4) aufweist, die den Austritt, über die gegenüberliegende Seite des Leiters, der Lichtstrahlen (3.5) des Bündels bewirkt, die auf die reflektierende ebene Fläche (3.4) auftreffen, wobei die reflektierenden ebenen Flächen (3.4) zueinander parallel sind, und **dadurch gekennzeichnet, dass** der Entnahmeabschnitt mindestens eine transparente Zwischenzone aufweist, die von einem ebenen Abschnitt parallel zur Fläche des Leiters gebildet wird und die zwischen den Mikrostrukturen angeordnet ist.

**2.** Optische Leitvorrichtung nach Anspruch 1, **dadurch gekennzeichnet, dass** jede Mikrostruktur aus einem Prisma besteht, das einen Vorsprung auf der Seite des Leiters (3.2) bildet.

**3.** Optische Leitvorrichtung nach Anspruch 1, **dadurch gekennzeichnet, dass** jede Mikrostruktur aus einem ausgehöhlten Prisma auf der Seite des Leiters (6.3, 6.4) besteht.

**4.** Optische Leitvorrichtung nach einem der Ansprüche 1 1 bis 3, **dadurch gekennzeichnet, dass** der Entnahmeabschnitt aus mehreren Zonen besteht, wobei jede Zone durch eine besondere Anordnung der Mikrostrukturen und der Zwischenzonen gekennzeichnet ist.

**5.** Optische Leitvorrichtung nach einem der Ansprüche 1 bis 4, **dadurch gekennzeichnet, dass** jede Mikrostruktur ein Streifen über die ganze Länge des Entnahmeabschnitts ist.

**6.** Optische Leitvorrichtung nach einem der Ansprüche 1 bis 5, **dadurch gekennzeichnet, dass** der Austritt des Bündels aus dem optischen Leiter ein Austrittsbild formt, das zwei Endstrahlen definiert, die Winkel $\omega_-$ bzw. $\omega_+$ mit der Normalen zur Entnahmefläche außerhalb des Leiters und $\omega_{n-}$ bzw. $\omega_{n+}$ mit der Normalen zur Entnahmefläche innerhalb des Leiters bilden, und der von der reflektierenden ebenen Fläche (3.4) jeder Mikrostruktur mit der Entnahmefläche ge-

bildete Winkel $\mu$ einen Wert geringer als ein Winkel

$$\mu_- = \frac{\pi/2 - \omega_{n+}}{3}$$

oder größer als ein Winkel

$$\mu_+ = \frac{\pi/2 - \omega_{n-}}{3}$$ hat.

**7.** Herstellungsverfahren einer optischen Leitvorrichtung nach einem der Ansprüche 1 bis 6, **dadurch gekennzeichnet, dass** es die folgenden Schritte aufweist:

- einen Schritt der Erzeugung durch Formen der Vielzahl von Mikrostrukturen und der mindestens einen transparenten Zwischenzone an der Oberfläche einer der zwei Seiten des optischen Leiters;
- einen Schritt des Aufbringens einer reflektierenden dünnen Schicht auf die ebene Fläche jeder Mikrostruktur, die dazu bestimmt ist, den Austritt der Lichtstrahlen (3.5) des Bündels aus dem Leiter zu bewirken, die auf die ebene Fläche (3.4) auftreffen.

**8.** Optisches Okularsichtsystem, **dadurch gekennzeichnet, dass** es eine optische Leitvorrichtung nach einem der Ansprüche 1 bis 6 enthält.

**Claims**

**1.** Optical guiding device for guiding a light beam (1.3) transporting an image, comprising:

- a material forming a guide (1.5) equipped with two parallel planar faces (2.3, 2.4), the image-transporting light beam then being collimated;
- an injection section (1.4) allowing the entry of the light beam into the guide (1.5), the beam (1.6) propagating through the guide via successive reflections from the two faces (2.3, 2.4) of the guide;
- an extraction section (1.7) allowing the exit of the beam;

in which the extraction section comprises a plurality of microstructures located on the surface of one of the two faces (3.2) of the guide (1.5), each microstructure comprising a reflective planar surface (3.4) that causes the exit, via the opposite face of the guide, of the light rays (3.5) of the beam that strike said reflective planar surface (3.4), said reflective planar surfaces (3.4) being parallel to one another, and **characterized in that** the extraction section comprises at least one transparent interstitial region that is formed from a planar section parallel to the surface of the guide and that is placed between said microstructures.

2.  Optical guiding device according to Claim 1, **characterized in that** each microstructure is composed of a prism that protrudes from the face of the guide (3.2).

3.  Optical guiding device according to Claim 1, **characterized in that** each microstructure is composed of a prism recessed into the face of the guide (6.3, 6.4).

4.  Optical guiding device according to one of Claims 1 to 3, **characterized in that** said extraction section is composed of a plurality of regions, each region being **characterized by** a particular arrangement of the microstructures and of the interstitial regions.

5.  Optical guiding device according to one of Claims 1 to 4, **characterized in that** each microstructure is a strip over the entire length of the extraction section.

6.  Optical guiding device according to one of Claims 1 to 5, **characterized in that** the exit of the beam from the optical guide forms an exit image defining two extreme rays that respectively make angles $\omega_-$ and $\omega_+$ to the normal to the extraction surface outside the guide and $\omega_{n-}$ and $\omega_{n+}$ to the normal to the extraction surface inside the guide, and the angle $\mu$ made by said reflective planar surface (3.4) of each microstructure to the extraction surface has a value lower than an angle $\mu_- = \dfrac{\pi/2 - \omega_{n+}}{3}$ or higher than an angle $\mu_- = \dfrac{\pi/2 - \omega_{n-}}{3}$.

7.  Process for manufacturing an optical guiding device according to one of Claims 1 to 6, **characterized in that** it comprises the following steps:

    - a step of generating, by moulding, the plurality of microstructures and said at least one transparent interstitial region in the surface of one of the two faces of the optical guide;
    - a step of depositing, on the planar surface of each microstructure, a reflective thin layer intended to cause the exit from the guide of the light rays (3.5) of the beam that strike said planar surface (3.4).

8.  Ocular vision optical system **characterized in that** it comprises an optical guiding device according to one of Claims 1 to 6.

**Fig. 1**

**Fig. 2**

**Fig. 3**

**Fig. 4**

**Fig. 5**

**Fig. 6**

**Fig. 7**

Fig. 8

Fig. 9

**EP 2 220 523 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030086135 A
- WO 2001095027 A
- US 6825987 B2